# EUROPEAN PATENT APPLICATION

(11) **EP 4 600 729 A1**
(43) Date of publication of application: **13.08.2025**
(21) Application number: 22961927.5
(22) Date of filing: 08.12.2022
(51) Int. Cl.: G02F 1/167

(54) **ELECTRONIC PAPER PANEL HAVING UNFILLED CORNER ON DISPLAY AREA**

(30) Priority: 09.10.2022 CN 202222642433 U
(71) Applicant: Hanshow Technology Co., Ltd., Jiaxing, Zhejiang 314031 (CN)
(72) Inventor: LI, Yanchen, Jiaxing, Zhejiang 314031 (CN); ZHAO, Jianguo, Jiaxing, Zhejiang 314031 (CN); HOU, Shiguo, Jiaxing, Zhejiang 314031 (CN)
(74) Representative: Patentanwälte Olbricht Buchhold Keulertz
(86) International application number: PCT/CN2022/137387
(87) International publication number: WO 2024/077748

(57) **Abstract**

The present disclosure provides an electronic paper screen with an unfilled corner in a display area, including a thin film transistor substrate (1) and an electronic paper film (2). A polygonal display area (101) is formed on the thin film transistor substrate (1). A vacant area (103) is reserved in at least one corner of the display area (101). An electrical connection point (4) is provided on the electronic paper film (2) at a position corresponding to at least one vacant area (103), and configured to connect an electrode of the thin film transistor substrate (1) to an electrode of the electronic paper film (2). The present disclosure solves the technical problem that the placement of the electrical connection point causes irregular shaping of the electronic paper film and the protective film, leading to an increase in the size and cost of the electronic paper screen.

## Description

### CROSS-REFERENCE TO RELATED APPLICATIONS

The present disclosure claims priority to Chinese Invention Patent Application No. 202222642433.X, filed October 9, 2022, and entitled "electronic paper screen with unfilled corner in display area".

### TECHNICAL FIELD

The present disclosure relates to the field of electronic display technologies, and particularly to an electronic paper screen with an unfilled corner in a display area.

### BACKGROUND

The electronic-paper screen is a type of display screen manufactured by an electrophoretic display technology. It achieves the effect of displaying images by applying a driving voltage to each pixel through a control circuit on a thin film transistor (TFT) substrate. As a reflective display screen, the electronic-paper screen can keep a displayed image for a long time without continuous refreshing after the image is updated, thus achieving very low power consumption. Due to its advantages such as low power consumption, wide viewing angles, high contrast, and eye protection, the electronic-paper screen is increasingly widely used in the fields of electronic shelf labels, electronic books, billboards and the like.

The AA region (active display region) of a conventional electronic-paper screen is rectangular, and in order to drive an electrode (e.g., a VCOM ITO electrode) on an FPL (Electronic Paper Film), it is necessary to reserve an ear hole on a partial area extending outwards on the FPL, set an electrical connection point (Ag glue dot) in the position of the ear hole, and connect an electrode (e.g., a VCOM electrode) on the TFT substrate to an electrode (e.g., a VCOM ITO electrode) on the FPL by means of Ag glue dispensing. However, the presence of the ear hole leads to the irregular shaping of both the FPL and a PS (i.e., a protective film, which mainly includes a waterproof layer and an anti-glare layer, and is attached to the FPL for anti-glare and isolating water vapor from entering the FPL) This irregularity also increases the dimensions of the FPL, PS, and TFT. As a result, a bezel of the electronic-paper screen is widened, a screen-to-body ratio is reduced, and the cutting yield of the FPL, the PS and the TFT of the electronic-paper screen are decreased (during raw material production, to improve efficiency and reduce cost, the FPL, the PS and the TFT are cut in the form of large or master slices, and several small slices may be arranged on one large or master slice, in which one small slice is the size and the form actually required by one electronic-paper screen, and the "cutting yield" refers to the maximum number of the small slices arranged and cut on the large slice), resulting in increased material costs.

Regarding the issue in related technologies where the placement of electrical connection points causes the irregular shaping of the electronic paper film and protective film, increasing the size and cost of electronic-paper screens, no effective solution has been proposed so far.

### SUMMARY

The objective of the present disclosure is to provide an electronic paper screen with an unfilled corner in a display area, which can avoid the irregularity of the shape of the electronic paper film, increase the screen-to-body ratio of the electronic paper screen, and reduce costs.

The objective of the present disclosure can be achieved by the following solution:
The present disclosure provides an electronic paper screen with an unfilled corner in a display area, including a thin film transistor substrate and an electronic paper film. A polygonal display area is formed on the thin film transistor substrate, and a vacant area is reserved in at least one corner of the display area. An electrical connection point is provided on the electronic paper film at a position corresponding to at least one vacant area, and configured to connect an electrode of the thin film transistor substrate to an electrode of the electronic paper film.

The present disclosure has the following advantageous effects:
In the electronic paper screen with an unfilled corner in a display area, the vacant area is reserved in at least one corner of the polygonal display area on the thin film transistor substrate, and the electrical connection point is provided on the electronic paper film at a position corresponding to the vacant area. This design avoids the need to create an outward-extending ear hole on the electronic paper film and avoids placing the electrical connection point at such ear hole, thereby preventing irregular shaping of the electronic paper film, increasing the screen-to-body ratio of the electronic paper screen, and reducing costs.

### BRIEF DESCRIPTION OF DRAWINGS

The following drawings are only intended to schematically illustrate and explain the present disclosure, rather than limiting the scope of the present disclosure. In the drawings:
FIG. 1 illustrates a longitudinal cross-sectional view of an electronic paper screen with an unfilled corner in a display area according to the present disclosure.
FIG. 2 illustrates a first planar structural schematic diagram of an electronic paper screen with an unfilled corner in a display area according to the present disclosure.
FIG. 3 illustrates a second planar structural schematic diagram of an electronic paper screen with an unfilled corner in a display area according to the present disclosure.
FIG. 4 illustrates a third planar structural schematic diagram of an electronic paper screen with an unfilled corner in a display area according to the present disclosure.
FIG. 5 illustrates a fourth planar structural schematic diagram of an electronic paper screen with an unfilled corner in a display area according to the present disclosure.
FIG. 6 illustrates a fifth planar structural schematic diagram of an electronic paper screen with an unfilled corner in a display area according to the present disclosure.
FIG. 7 illustrates a sixth planar structural schematic diagram of an electronic paper screen with an unfilled corner in a display area according to the present disclosure.
FIG. 8 illustrates a seventh planar structural schematic diagram of an electronic paper screen with an unfilled corner in a display area according to the present disclosure.
FIG. 9 illustrates an eighth planar structural schematic diagram of an electronic paper screen with an unfilled corner in a display area according to the present disclosure.
FIG. 10 illustrates a ninth planar structural schematic diagram of an electronic paper screen with an unfilled corner in a display area according to the present disclosure.
FIG. 11 illustrates a tenth planar structural schematic diagram of an electronic paper screen with an unfilled corner in a display area according to the present disclosure.

### DESCRIPTION OF EMBODIMENTS

In order to have a clearer understanding of the technical features, objectives and effects of the present disclosure, the specific embodiments of the present disclosure will now be explained with reference to the drawings.

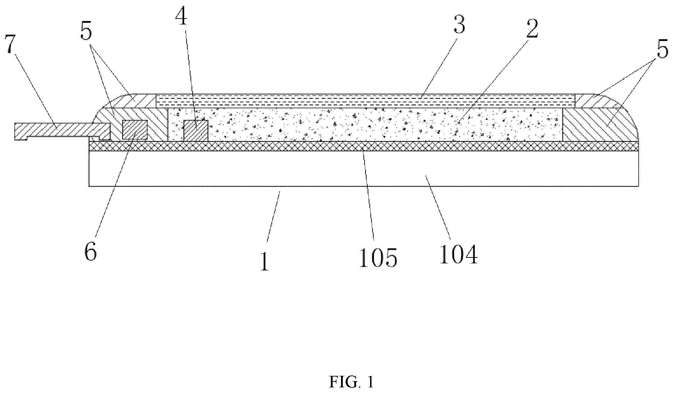

As illustrated in FIGS. 1 to 11, the present disclosure provides an electronic paper screen with an unfilled corner in a display area, including a thin film transistor substrate 1 and an electronic paper film 2. A polygonal display area 101 is formed on the thin film transistor substrate 1. A vacant area 103 is reserved in at least one corner of the display area 101. An electrical connection point 4 (i.e., an Ag glue dot) is provided on the electronic paper film 2 at a position corresponding to at least one vacant area 103. The electrical connection point 4 is configured to connect an electrode (i.e., a VCOM electrode) of the thin film transistor substrate 1 to an electrode (i.e., a VCOM ITO electrode) of the electronic paper film 2.

In the present disclosure, the vacant area 103 is reserved in at least one corner of the polygonal display area 101 on the thin film transistor substrate 1, and the electrical connection point 4 is provided on the electronic paper film 2 at a position corresponding to the vacant area 103. This design avoids the need to create an outward-extending ear hole on the electronic paper film 2, thereby preventing irregular shaping of the electronic paper film 2, increasing the screen-to-body ratio of the electronic paper screen, and reducing costs.

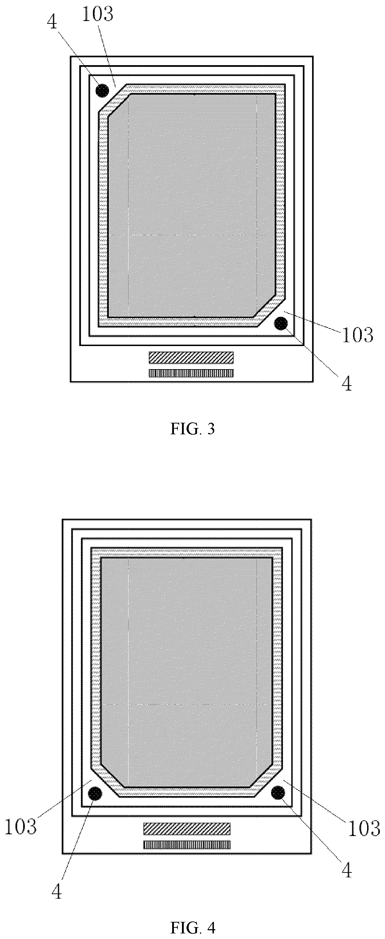

In an optional embodiment of the present disclosure, as illustrated in FIGS. 3 to 6, there are a plurality of vacant areas 103, and the electronic paper film 2 is provided with electrical connection points 4 at positions corresponding to the vacant areas.

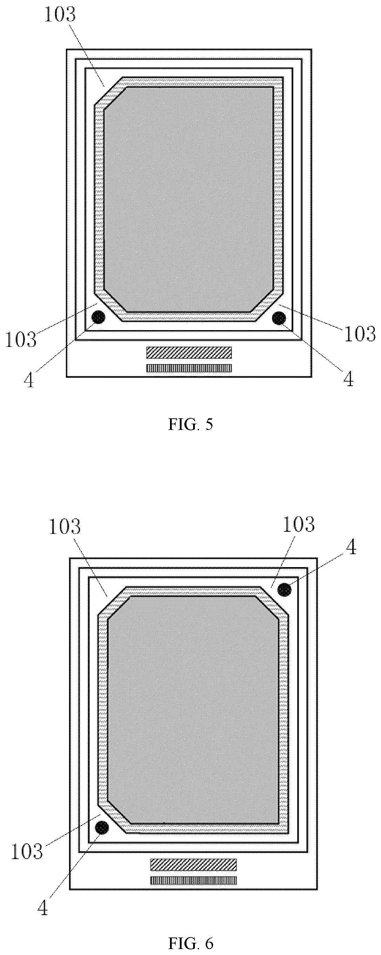

Specifically, as illustrated in FIG. 3, the display area 101 is rectangular, two diagonal corners of the display area 101 are provided with the vacant areas 103, and the electrical connection points 4 are provided at the two vacant areas 103. As illustrated in FIG. 4, two adjacent corners of the display area 101 are provided with the vacant areas 103, and the electrical connection points 4 are provided at the two vacant areas 103. As illustrated in FIG. 5, any three corners of the display area 101 are provided with the vacant areas 103, in which the electrical connection points 4 are provided at the vacant areas 103 of two adjacent corners, and no electrical connection point 4 may be provided at the other vacant area 103. As illustrated in FIG. 6, any three corners of the display area 101 are provided with the vacant areas 103, in which the electrical connection points 4 may be provided at the vacant areas 103 of two diagonal corners, and no electrical connection point 4 may be provided at the other vacant area 103.

In an optional embodiment of the present disclosure, at the position on the electronic paper film 2 that corresponds to the vacant area 103, there is a plurality of electrical connection points 4 (i.e., one vacant area 103 corresponds to a plurality of electrical connection points 4).

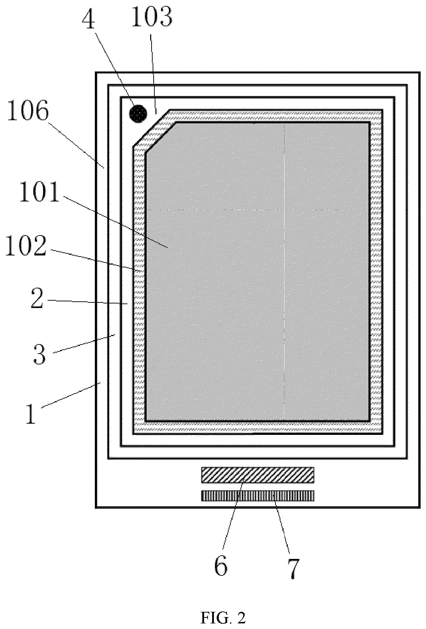

In an optional embodiment of the present disclosure, as illustrated in FIGS. 2 to 9, on a plane where the thin film transistor substrate 1 is located, two adjacent sides close to the same corner of the display area 101 are connected by a straight line, so as to partition the vacant area 103 at the corner of the display area 101.

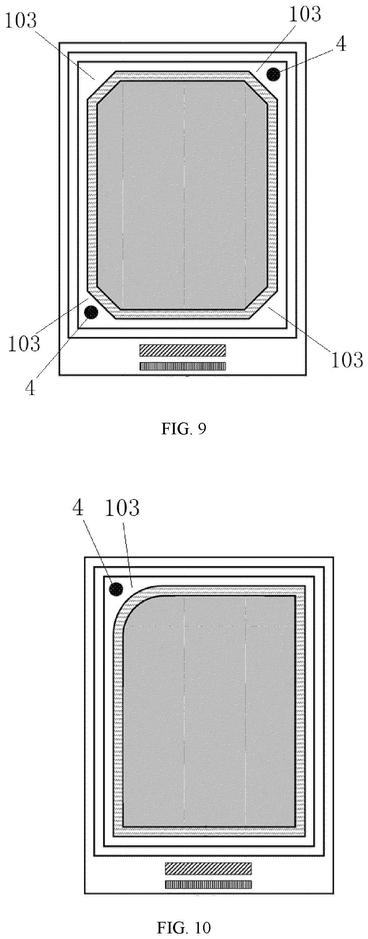

In an optional embodiment of the present disclosure, as illustrated in FIG. 10, on a plane where the thin film transistor substrate 1 is located, two adjacent sides close to the same corner of the display area 101 are connected by an arc, so as to partition the vacant area 103 at the corner of the display area 101.

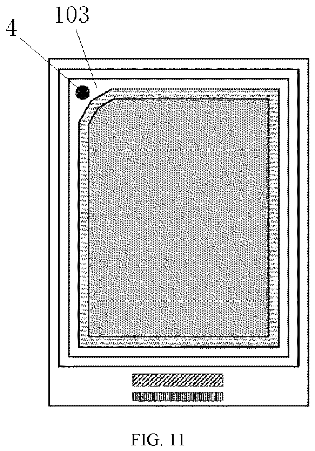

In an optional embodiment of the present disclosure, as illustrated in FIG. 11, on a plane where the thin film transistor substrate 1 is located, two adjacent sides close to the same corner of the display area 101 are connected by a plurality of line segments, so as to partition the vacant area 103 at the corner of the display area 101.

Of course, the vacant area 103 is not limited to the three shapes illustrated in FIGS. 2 to 11, but may be of any other shape, as long as the vacant area 103 provided with the ear hole can be formed in the corner of the display area 101.

In an optional embodiment of the present disclosure, as illustrated in FIGS. 2 to 11, the electrical connection point 4 is dot-shaped. Of course, the electrical connection point 4 may also be line-shaped (i.e., a plurality of electrical connection points 4 corresponding to one vacant area 103 are connected to form a line shape). In addition, the shape of the electrical connection point 4 may be designed into any shape according to actual design requirements.

In an optional embodiment of the present disclosure, as illustrated in FIG. 2, a non-display area 106 is formed on the thin film transistor substrate 1, and a border area 102 is formed between the non-display area 106 and the display area 101. The non-display area 106 is arranged to surround the display area 101. The border area 102, which is in a ring shape, is connected between the non-display area 106 and the display area 101 to demarcate the non-display area 106 and the display area 101.

Specifically, as illustrated in FIG. 2, the thin film transistor substrate 1 is rectangular, and an area in the thin film transistor substrate 1 is the display area 101 (i.e., an AA area, also called an effective display area); an area surrounding the display area 101 is the non-display area 106; and a ring-shaped area with a width between the display area 101 and the non-display area 106 is the border area 102 used to demarcate the display area 101 and the non-display area 106.

In an optional embodiment of the present disclosure, as illustrated in FIGS. 1 and 2, the electronic paper film 2 is stacked with a front surface of the thin film transistor substrate 1, and the electronic paper film 2 covers both the display area 101 and the border area 102.

Further, the electrode of the thin film transistor substrate 1 is located at the vacant area 103, and the electronic paper film 2 is provided with an ear hole at a position corresponding to the vacant area 103 to expose the electrode of the electronic paper film 2 to the outside. the electric connection point 4 is located at the ear hole to connect the electrode of the thin film transistor substrate 1 to the electrode of the electronic paper film 2.

In an optional embodiment of the present disclosure, as illustrated in FIGS. 1 and 2, the electronic paper screen with an unfilled corner in a display area further includes a protective film 3, which is stacked with the electronic paper film 2 and the thin film transistor substrate 1 and covers the electronic paper film 2. The protective film 3 includes a waterproof layer (i.e., a barrier film) and an anti-glare layer (AG/PET film) which are stacked with each other, so as to achieve the effects of anti-glare and water vapor isolation, and effectively prevent water vapor from entering the thin film transistor substrate 1.

In an optional embodiment of the present disclosure, as illustrated in FIG. 1, edges of the protective film 3 and the electronic paper film 2 are provided with an edge sealing structure 5 which serves to further insulate water vapor.

Further, the edge sealing structure 5 may be, but not limited to, edge sealing glue coated on the edges of the protective film 3 and the electronic paper film 2.

In an optional embodiment of the present disclosure, as illustrated in FIG. 1, the thin film transistor substrate 1 includes a glass board 104 and a circuit board 7, a thin film crystal array 105 and a driving circuit are provided on the glass board 104, an integrated circuit 6 is provided in the edge sealing structure 5, the driving circuit is connected to the integrated circuit 6 through the electrical connection point 4, and the integrated circuit 6 is connected to an external control circuit through the circuit board 7.

Further, the integrated circuit 6 and the circuit board 7, located below the protective film 3, may be thermoscompression bonded to the thin film transistor substrate 1 using (Anisotropic Conductive Film) ACF glue.

In the present disclosure, as illustrated in FIG. 1, the thin film transistor substrate 1, the electronic paper film 2 and the protective film 3 are stacked, and the VCOM electrode on the thin film transistor substrate 1 is connected to the VCOM ITO electrode on the electronic paper film 2 through the electrical connection point 4. The thin film transistor substrate 1 is provided with the thin film crystal array 105 and the driving circuit which controls the voltage applied to the thin film crystal array 105. The electronic paper film 2 displays an image actually seen by human eyes, and an electric field is formed between the VCOM electrode on the thin film transistor substrate 1 and the VCOM ITO electrode on the electronic paper film 2, thereby driving electronic ink in the electronic paper film 2 to display the image. The integrated circuit 6 is connected to the circuit board 7, which serves to connect an external control circuit, enabling signal transmission between the external control circuit and the electronic paper film 2. The integrated circuit 6 converts a signal received from the external control circuit into a voltage and a timing signal required to refresh the electronic paper film 2.

In a specific embodiment of the present disclosure, as illustrated in FIG. 2, the vacant area 103 is located at an upper left corner of the display area 101, and the electrical connection point 4 is provided at the vacant area 103. Of course, it is also possible to dispose the vacant area 103 at an upper right corner, a lower left corner or a lower right corner of the display area 101 (not illustrated), and dispose the electrical connection point 4 at the corresponding vacant area 103.

In a specific embodiment of the present disclosure, as illustrated in FIG. 3, there are two vacant areas 103 located at the upper-left corner and the lower-right corner of the display area 101, respectively, and the electrical connection points 4 are provided at the corresponding vacant areas 103. Alternatively, the two vacant areas 103 may also be located at the upper-right corner and the lower-left corner of the display area 101 (not illustrated), respectively, and the electrical connection points 4 are provided in the corresponding vacant areas 103. In this embodiment, although both the two vacant areas 103 are provided with the electrical connection points 4, in actual products, depending on specific situations, only one of the vacant areas 103 may be provided with the electrical connection point 4, while the other vacant area 103 is not provided with the electrical connection point 4.

In a specific embodiment of the present disclosure, as illustrated in FIG. 4, there are two vacant areas 103 located at the lower-left corner and the lower-right corner of the display area 101, respectively, and the electrical connection points 4 are provided at the corresponding vacant areas 103. Alternatively, the two vacant areas 103 may also be located at the upper-left corner and the upper-right corner of the display area 101 (not illustrated), respectively, or at the upper-left corner and the lower-left corner of the display area 101 (not illustrated), respectively, or at the upper-right corner and the lower-right corner of the display area 101 (not illustrated), respectively, and the electrical connection points 4 are provided at the corresponding vacant areas 103. In this embodiment, although both the two vacant areas 103 are provided with the electrical connection points 4, in actual products, depending on specific situations, only one of the vacant areas 103 may be provided with the electrical connection point 4, while the other vacant area 103 is not provided with the electrical connection point 4.

In a specific embodiment of the present disclosure, as illustrated in FIGS. 5 and 6, the vacant areas 103 may be provided in any three corners of the display area 101, and the electrical connection points 4 may be provided at the vacant areas 103 of two of the three corners, while the vacant area 103 of the other corner is not provided with the electrical connection point 4. As illustrated in FIG. 5, the vacant areas 103 are provided at the upper-left corner, the lower-left corner and the lower-right corner of the display area 101, but the electrical connection points 4 are only provided at the vacant areas 103 of the lower-left corner and the lower-right corner of the display area 101. As illustrated in FIG. 6, the vacant areas 103 are provided at the upper-left corner, the upper-right corner and the lower-left corner of the display area 101, but the electrical connection points 4 are only provided at the vacant areas 103 of the upper-right corner and the lower-left corner of the display area 101.

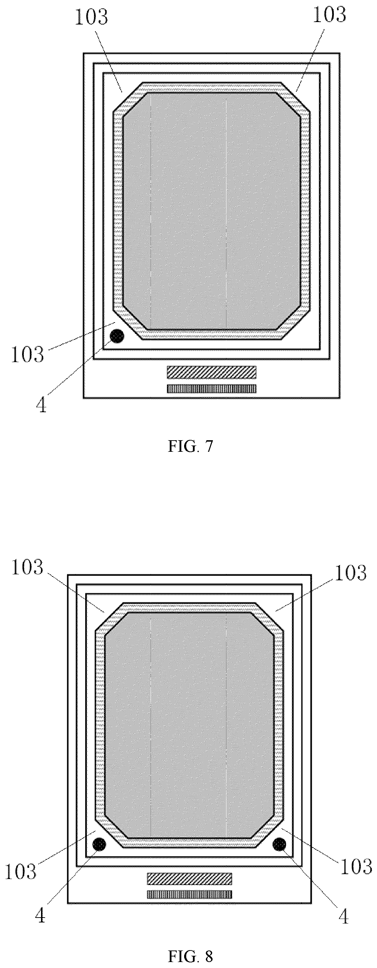

In a specific embodiment of the present disclosure, as illustrated in FIGS. 7 to 9, the vacant areas 103 may be provided at four corners of the display area 101, and the electrical connection point 4 may be provided in the vacant area 103 of at least one of the four corners. As illustrated in FIG. 7, the vacant areas 103 are provided at all of the upper-left corner, the lower-left corner, the upper-right corner and the lower-right corner of the display area 101, but the electrical connection point 4 is only provided in the vacant area 103 of the lower-left corner of the display area 101, and no electrical connection point 4 may be provided at the vacant areas 103 of the other three corners. As illustrated in FIG. 8, the vacant areas 103 are provided in all of the upper-left corner, the lower-left corner, the upper-right corner and the lower-right corner of the display area 101, but the electrical connection points 4 are only provided at the vacant areas 103 of the lower-left corner and the lower-right corner of the display area 101, and no electrical connection point 4 may be provided in the vacant areas 103 of the other two corners. As illustrated in FIG. 9, the vacant areas 103 are provided at all of the upper-left corner, the lower-left corner, the upper-right corner and the lower-right corner of the display area 101, but the electrical connection points 4 are only provided at the vacant areas 103 of the lower-left corner and the upper-right corner of the display area 101, and no electrical connection point 4 may be provided at the vacant areas 103 of the other two corners.

Of course, the above embodiments are also applicable to the vacant area 103 of other shapes, i.e., the positions of the vacant area 103 and the electrical connection point 4 remain unchanged, with only the shape of the vacant area 103 being modified, provided that such modifications do not affect the configuration of the ear hole and the electrical connection point 4.

Those described above are only schematic specific embodiments of the present disclosure, and are not intended to limit the scope of the present disclosure. Any equivalent change or modification made by persons skilled in the art without departing from the concept and principle of the present disclosure should fall within the protection scope of the present disclosure.

## Claims

1. An electronic paper screen with an unfilled corner in a display area, comprising a thin film transistor substrate and an electronic paper film, wherein a polygonal display area is formed on the thin film transistor substrate, and a vacant area is reserved in at least one corner of the display area; and
an electrical connection point is provided on the electronic paper film at a position corresponding to at least one vacant area, and configured to connect an electrode of the thin film transistor substrate to an electrode of the electronic paper film.

2. The electronic paper screen with an unfilled corner in a display area according to claim 1, wherein there are a plurality of the vacant areas, and the electronic paper film is provided with electrical connection points at positions respectively corresponding to the vacant areas.

3. The electronic paper screen with an unfilled corner in a display area according to claim 1, wherein a plurality of electrical connection points are provided on the electronic paper film at positions corresponding to one vacant area.

4. The electronic paper screen with an unfilled corner in a display area according to any one of claims 1 to 3, wherein on a plane where the thin film transistor substrate is located, two adjacent sides close to the same corner of the display area are connected by a straight line, to partition the vacant area at the corner of the display area.

5. The electronic paper screen with an unfilled corner in a display area according to any one of claims 1 to 3, wherein on a plane where the thin film transistor substrate is located, two adjacent sides close to the same corner of the display area are connected by an arc, to partition the vacant area at the corner of the display area.

6. The electronic paper screen with an unfilled corner in a display area according to any one of claims 1 to 3, wherein on a plane where the thin film transistor substrate is located, two adjacent sides close to the same corner of the display area are connected by a plurality of line segments, to partition the vacant area at the corner of the display area.

7. The electronic paper screen with an unfilled corner in a display area according to claim 1, wherein the electrical connection point is dot-shaped or line-shaped.

8. The electronic paper screen with an unfilled corner in a display area according to claim 1, wherein a non-display area is formed on the thin film transistor substrate, and a border area is formed between the non-display area and the display area.

9. The electronic paper screen with an unfilled corner in a display area according to claim 8, wherein the non-display area is provided to surround the display area, and the border area, which is in a ring shape, is connected between the non-display area and the display area to demarcate the non-display area and the display area.

10. The electronic paper screen with an unfilled corner in a display area according to claim 8, wherein the electronic paper film is stacked with the thin film transistor substrate, and covers the display area and the border area.

11. The electronic paper screen with an unfilled corner in a display area according to claim 9, wherein the electrode of the thin film transistor substrate is located in the vacant area, the electronic paper film is provided with an ear hole at a position corresponding to the vacant area to expose the electrode of the electronic paper film to the outside, and the electric connection point is located at the ear hole to connect the electrode of the thin film transistor substrate to the electrode of the electronic paper film.

12. The electronic paper screen with an unfilled corner in a display area according to claim 11, further comprising a protective film, which is stacked with the electronic paper film and the thin film transistor substrate and covers the electronic paper film.

13. The electronic paper screen with an unfilled corner in a display area according to claim 12, wherein edges of the protective film and the electronic paper film are provided with an edge sealing structure.

14. The electronic paper screen with an unfilled corner in a display area according to claim 13, wherein the thin film transistor substrate comprises a glass board and a circuit board, a thin film crystal array and a driving circuit are provided on the glass board, an integrated circuit is provided in the edge sealing structure, the driving circuit is connected to the integrated circuit through the electrical connection point, and the integrated circuit is connected to an external control circuit through the circuit board.
